# EUROPEAN PATENT SPECIFICATION

(11) **EP 2 103 868 B1**
(45) Date of publication and mention of the grant of the patent: **18.01.2012**
(21) Application number: 09004044.5
(22) Date of filing: 20.03.2009
(51) Int. Cl.: F21S 8/12, F21V 14/08, F21W 101/10

(54) **Vehicle headlamp**
Fahrzeugscheinwerfer
Phare de véhicule

(30) Priority: 21.03.2008 JP 2008074438
(43) Date of publication of application: 23.09.2009
(73) Proprietor: KOITO MANUFACTURING CO., LTD, Tokyo (JP)
(72) Inventor: Yamamura, Satoshi c/o Koito Manufacturing Co., Ltd., Shizuoka-shi Shizuoka (JP)
(74) Representative: Grünecker, Kinkeldey, Stockmair & Schwanhäusser

(56) References cited:
- WO-A1-2009/039882
- DE-A1- 10 248 445
- DE-A1- 19 501 173
- DE-A1-102004 025 433

## Description

### BACKGROUND OF THE INVENTION

### <FIELD OF THE INVENTION>

The present invention relates to a vehicle headlamp employed in an automobile or the like.

### <BACKGROUND ART>

In a vehicle headlamp, in general, a low beam and a high beam can be switched to each other. A low beam illuminates a near area at a predetermined illuminance. A light distribution regulation is set forth in order that glare should not be caused in oncoming vehicles and ahead-going vehicles. Such a low beam is used mainly in running an urban area. In contrast, a high beam illuminates a large area and a distant place in the forward direction at a relatively high illuminance. A high beam is used mainly in running at high speeds on a road where only a small number of oncoming vehicles and ahead-going vehicles are met.

In certain vehicle headlamps, in order that the visibility of the road surface in the vehicle front should be improved at the time of cornering of a vehicle, lighting device units supported in a manner rotatable in the right and left directions or in the up and down directions are controlled and rotated in accordance with the vehicle running situation (e.g., Patent Document JP-A-2003-123514). Then, when the direction of the beams projected from the lighting device units is changed, beam projection is achieved by using a light distribution pattern suitable for the vehicle running condition.

A high beam provides better visibility to a driver than a low beam, but causes glare to the driver of a vehicle (referred to as an "in-front vehicle", hereinafter) that runs in front of the own vehicle. In order that such a situation should be avoided, a vehicle headlamp like that described in the above-mentioned Patent Document JP-A-2003-123514 may be employed, and then the direction of the beams projected from the lighting device units may be changed such as to avoid the position of the in-front vehicle. Nevertheless, this causes insufficient illumination of the road surface in the vehicle front, and hence results in the problem of poor visibility.
DE 102 48 445 A1 describes a vehicle headlamp according to the preamble of claim 1.

### SUMMARY OF THE INVENTION

One or more embodiments of the present invention provide a vehicle headlamp for sufficiently illuminating a road surface in a vehicle front so as to improve a visibility of a road, without causing glare to a driver of an in-front vehicle.

In accordance with one or more embodiments of the present invention, a vehicle headlamp 10, 80 is provided with the features defined in claim 1.

According to the above embodiments, in the headlamp for forming an overall light distribution pattern obtained by combining two light distribution patterns each having a non-perpendicular cutoff line, the non-perpendicular cutoff lines in the light distribution pattern are moved such that a shaded region should be formed in accordance with the position of an in-front vehicle detected by the vehicle position detecting means. By virtue of this, shading control is achieved without causing glare to the driver of the in-front vehicle and in a state that the shaded region is minimized. Further, when the cutoff lines are moved, the width of the shaded region can be changed continuously. This permits fine control performed in accordance with the in-front vehicle position.
Here, the "light distribution pattern" indicates an image formed by illuminating light projected on a virtual vertical screen located in front of the light source. Thus, the "pattern" may be an image formed in a single color by illuminating light, rather than a pattern formed by a plurality of geometric figures. Further, the "initial state" indicates the state that the cutoff line moving means is not yet activated.

The position determining means may combine the non-perpendicular cutoff lines of the first light distribution pattern and the second light distribution pattern so as to form an approximately V-shaped shaded region, and then determine a lower end position of the shaded region such that the shaded region should follow the vehicle position in the vertical direction detected by the vehicle position detecting means. According to this approach, when the cutoff lines in the light distribution pattern are made non-perpendicular and the intersecting position of the cutoff lines is changed, the lower end of the V-shaped shaded region is displaced in the vertical direction. Thus, even when an in-front vehicle is located above the horizontal line like in a case that an in-front vehicle is running on an ascending slope, the shaded region can be changed such as to follow the vehicle position. Thus, the visibility of the front road surface can be ensured in a state that the shaded region is minimized.

The cutoff line moving means may be shade driving means for moving the first shade or the second shade in a direction of crossing the optical axis within each lighting device. When the shade is moved in a direction of crossing the optical axis within each lighting device, the cutoff line formed by the end part of the shade can be moved horizontally within the light distribution pattern.

The first lighting device and the second lighting device may further comprise a low-beam formation shade for shading a part of light emitted from the light source and thereby forming a low-beam light distribution pattern. In addition to the above-mentioned shade, when the low-beam formation shade is provided in each lighting device, a single lighting device can project both of a low-beam light distribution pattern and a light distribution pattern in which the cutoff lines are variable. This reduces the number of components.

The cutoff line moving means may be swivel means for horizontally rotating the optical axis of each of the first lighting device and the second lighting device. When the optical axis of the lighting device is rotated horizontally, the cutoff line formed by the end part of the shade provided in the lighting device can be moved horizontally within the light distribution pattern.

According to the vehicle headlamp of the above embodiments, non-perpendicular cutoff lines are made movable in a part above the horizontal line in the light distribution pattern. Thus, a light distribution pattern can be formed in which the shaded region is minimized in accordance with the position of an in-front vehicle.
Other aspects and advantages of the invention will be apparent from the following description, the drawings and the claims.

### BRIEF DESCRIPTION OF THE DRAWINGS

FIG. 1 is a schematic vertical cross sectional view of a vehicle headlamp according to a first embodiment.
FIG. 2 is a conceptual diagram in a case that a low-beam formation shade and a high-beam formation shade are viewed from the direction indicated by an arrow B shown in FIG. 1.
FIGS. 3A and 3B are diagrams showing a situation that a low-beam formation shade is tilted to the near side of the page.
FIGS. 4A to 4C are diagrams showing high-beam light distribution patterns formed on a virtual vertical screen in front of a lighting device.
FIG. 5 is a functional block diagram showing an overall configuration of a vehicle headlamp.
FIG. 6 is a flow chart showing a flow of shading control performed in accordance with the vehicle position.
FIG. 7 is a diagram showing a situation that an in-front vehicle is observed during the time that the own vehicle runs on a straight road.
FIGS. 8A and 8B are diagrams showing light distribution patterns formed by a right side lighting device and a left side lighting device at the time that an image of the vehicle front is taken in the situation shown in FIG. 7.
FIG. 9 is a diagram showing a situation that a right side light distribution pattern and a left side light distribution pattern shown in FIGS. 8A and 8B are projected.
FIG. 10 is a diagram showing a situation that an in-front vehicle is observed during the time that the own vehicle runs on an ascending slope road.
FIGS. 11A and 11B are diagrams showing light distribution patterns formed by a right side lighting device and a left side lighting device at the time that an image of the vehicle front is taken in the situation shown in FIG. 10.
FIG. 12 is a diagram showing a situation that a right side light distribution pattern and a left side light distribution pattern shown in FIGS. 11A and 11B are projected.
FIG. 13 is a diagram showing a situation that an in-front vehicle is observed during the time that the own vehicle runs on a curved road.
FIGS. 14A and 14B are diagrams showing light distribution patterns formed by a right side lighting device and a left side lighting device at the time that an image of the vehicle front is taken in the situation shown in FIG. 13.
FIG. 15 is a diagram showing a situation that a right side light distribution pattern and a left side light distribution pattern shown in FIG. 14 are projected.
FIG. 16 shows a situation that an ahead-going vehicle and an oncoming vehicle are observed during the running of the own vehicle.
FIGS. 17A and 17B are diagrams showing light distribution patterns formed by a right side lighting device and a left side lighting device at the time that an image of the vehicle front is taken in the situation shown in FIG. 16.
FIG. 18 is a diagram showing a situation that a right side light distribution pattern and a left side light distribution pattern shown in FIGS. 17A and 17B are projected.
FIG. 19 is a schematic vertical cross sectional view of a vehicle headlamp according to a second embodiment.
FIGS. 20A and 20B are diagrams showing high-beam light distribution patterns projected by a vehicle headlamp of FIG. 19.
FIG. 21 is a functional block diagram of a configuration of a vehicle headlamp according to the second Embodiment.
FIG. 22 is a diagram showing an overall light distribution pattern used in a case that an in-front vehicle is observed in front of the own vehicle that runs on a straight road.
FIG. 23 is a diagram showing an overall light distribution pattern used in a case that an in-front vehicle is observed in front of the own vehicle that runs on an ascending slope road.
FIG. 24 is a diagram showing an overall light distribution pattern used in a case that an in-front vehicle is observed in front of the own vehicle that runs on a curved road.

### DETAILED DESCRIPTION OF THE EXEMPLARY EMBODIMENTS

### <First Embodiment>

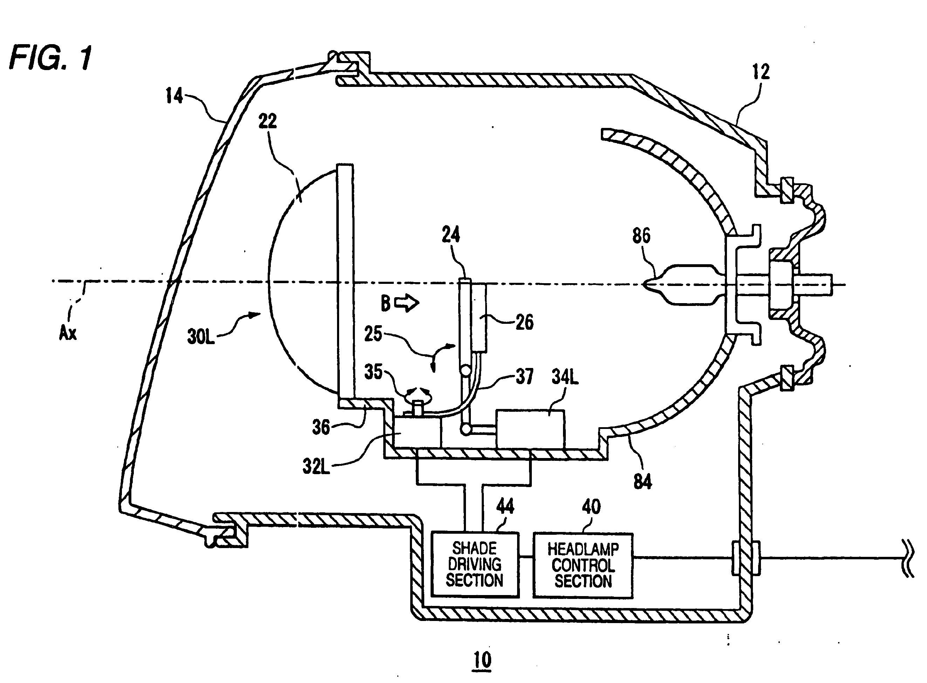

FIG. 1 is a schematic vertical cross sectional view of a vehicle headlamp 10 according to a first embodiment. The vehicle headlamp 10 has a left side lighting device 30L provided on a left side of a front part of a car body and a right side lighting device 30R provided on the right side. FIG. 1 shows solely the left side lighting device 30L, and the following description is given for the left side lighting device. However, the right side lighting device 30R has a basically similar configuration with the left side lighting device 30L.

The vehicle headlamp 10 has a configuration that the left side lighting device 30L is accommodated in an inside of a lamp chamber formed by a lamp body 12 and a light transmitting cover 14 attached to a front-end opening of the lamp body 12.
The left side lighting device 30L is attached to the lamp body 12 by a support member (not shown).

The left side lighting device 30L is a lighting device of projector types, and has a bulb 86 serving as a light source, a reflector 84, a projection lens 22, a low-beam formation shade 24, and a high-beam formation shade 26. In the left side lighting device 30L, light emitted from the bulb 86 is reflected by the reflector 84. Then, a part of light that goes forward from the reflector 84 is shaded by the low-beam formation shade 24 or the high-beam formation shade 26. As a result, a light distribution pattern having a cutoff line is projected onto a virtual vertical screen located in front of the lighting device.

The reflector 84 has a reflecting surface provided with approximately the shape of an ellipse spherical surface having a center axis on the optical axis Ax extending in the forward and rearward directions of the vehicle. In the reflecting surface, the cross section that contains the optical axis Ax has an elliptical shape. Further, the eccentricity gradually increases from the vertical cross section toward the horizontal cross section. The bulb 86 is arranged at a first focal point of the ellipse that constitutes the vertical cross section of the reflecting surface. Thus, light from the light source is focused on a second focal point of the above-mentioned ellipse.

The projection lens 22 is a planar-convex aspheric lens whose front-side surface is convex and whose rear-side surface is planar. The projection lens 22 is arranged on the optical axis Ax such that the rear-side focal point agrees with the second focal point of the reflecting surface of the reflector 84. Thus, an image on the rear-side focal plane is projected as an inverted image on the vertical virtual screen. The edge part of the projection lens 22 is held in a front-end annular groove of a holder 36.

Employable light sources for the lighting device include an incandescent lamp, a halogen lamp, an electric discharge ball, an LED, a neon tube, and a laser light source. The present embodiment shows an example in which the bulb 86 is composed of a halogen lamp. The bulb 86 is fit and fixed into an opening formed approximately in the center of the reflector 84, and then is supported by the lamp body 12.

The vehicle headlamp 10 is a headlight of switching type in which the low-beam formation shade 24 and the high-beam formation shade 26 which can be driven individually are provided so that both of a low-beam light distribution pattern and a high-beam light distribution pattern can be generated. The low-beam formation shade 24 is connected to a low-shade drive motor 34L via a gear wheel mechanism (not shown). When the low-shade drive motor 34L is activated, the low-beam formation shade 24 can be tilted forward or returned to the upright position as indicated by an arrow 25 in the figure.

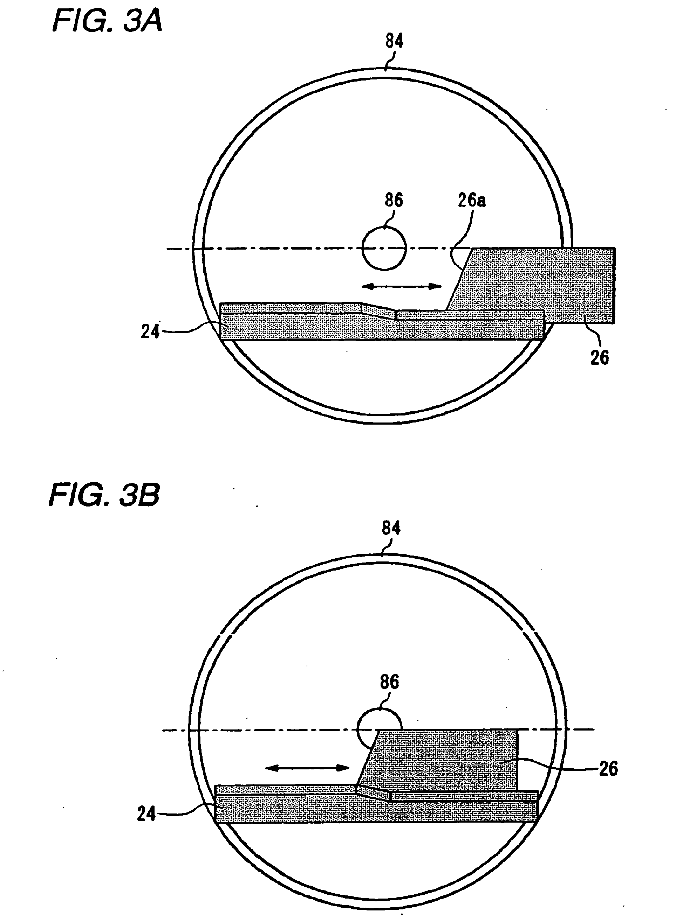

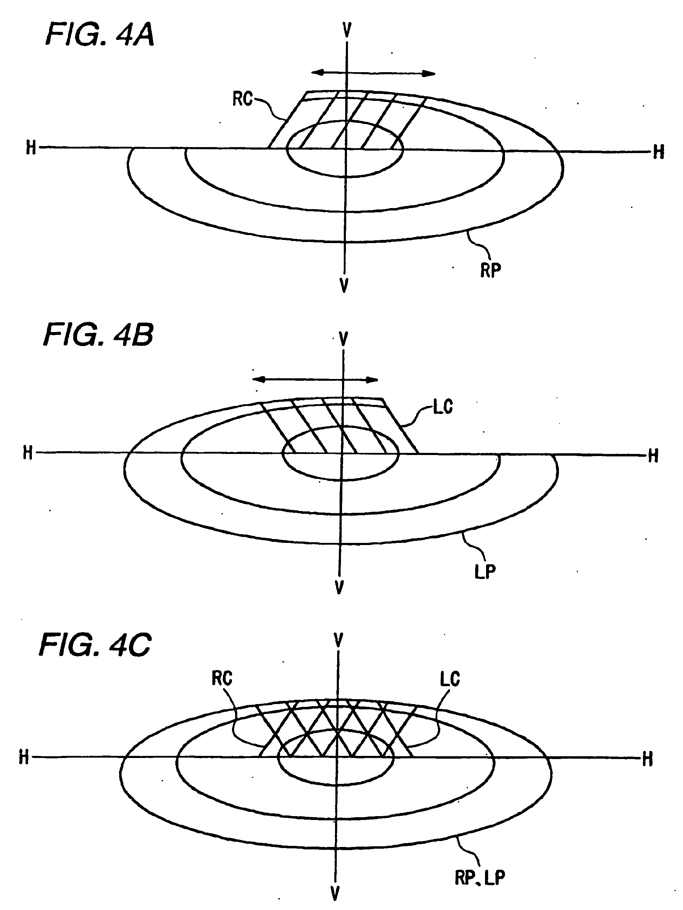

The high-beam formation shade 26 is connected to a high-shade drive motor 32L via an arm 37 having approximately an L-shape. The upper end of the arm 37 is fixed to the lower end of the high-beam formation shade 26. The lower end of the arm 37 is attached to the output axis of the high-shade drive motor 32L. When the high-shade drive motor 32L is activated and rotates as indicated by an arrow 35 in the figure, the high-beam formation shade 26 pivots about the output axis so as to move in a direction of crossing the optical axis Ax. The situation of this movement is described below in further detail with reference to FIGS. 3A to 3B and 4A to 4C.

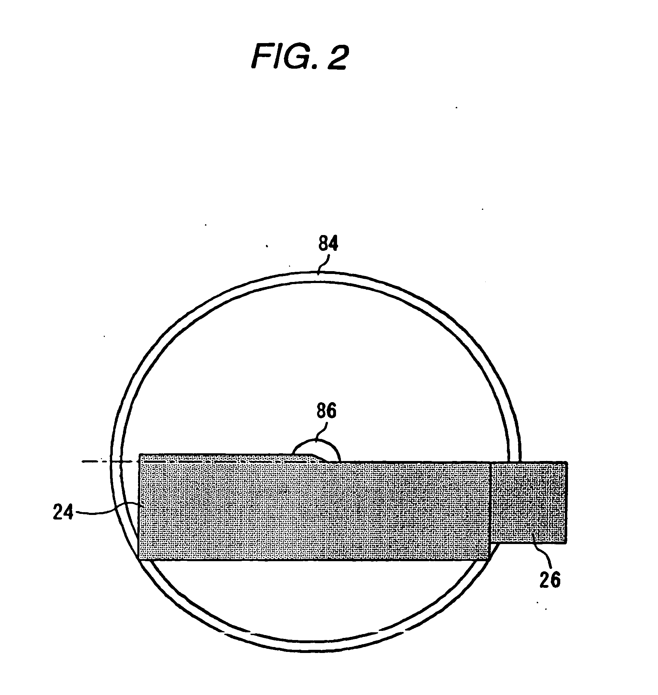

FIG. 2 is a conceptual diagram in a case that the low-beam formation shade 24 and the high-beam formation shade 26 are viewed from the direction indicated by an arrow B shown in FIG. 1. In order that a so-called cutoff line should be formed in the low-beam light distribution pattern, as shown in FIG. 2, the low-beam formation shade 24 has a shape obtained when a right-hand part that extends horizontally below the horizontal line crossing the optical axis on the right side of the vehicle width direction and a left-hand part that extends horizontally on the left side of the vehicle width direction along a level line slightly above the right side part are connected to each other via a center part inclined toward the upper left. The inclination angle of the center part is, for example, 45 degrees.

The high-beam formation shade 26 is arranged behind the low-beam formation shade 24, that is, on the light source side. As shown in FIGS. 3A and 3B, the high-beam formation shade 26 is arranged below the horizontal line that crosses the optical axis, and has approximately a trapezoidal shape. The left-hand edge of the shade 26 is formed by an inclined straight line extending toward the upper right. Thus, a cutoff line inclined upward from the horizontal line is formed in the high-beam light distribution pattern.

FIGS. 3A and 3B show a situation that the low-beam formation shade 24 is tilted to the near side of the page by the low-shade drive motor 34L. When the low-beam formation shade 24 is tilted down, a space through which a 1 light beam reflected by the reflector 84 can pass is generated below the horizontal line of the optical axis, so that a high-beam light distribution pattern is projected.

The high-beam formation shade 26 is movable in a direction of crossing the optical axis Ax. As shown in FIG. 3A, in the initial state, the shade 26 is arranged such that the inclination part 26a is located on the right side of the center line of the reflector 84. However, as shown in FIG. 3B, the shade 26 is movable into a configuration that the inclination part 26a is located on the left side of the center line of the reflector 84. It is preferable that the inclination part 26a of the high-beam formation shade 26 is movable continuously from the left-hand edge to the right-hand edge of the reflector 84 in a direction of crossing the optical axis Ax.

Here, it should be noted that the low-beam formation shade 24 and the high-beam formation shade 26 provided in the right side lighting device 30R are symmetrical to those of the left side lighting device 30L. That is, the high-beam formation shade 26 provided in the right side lighting device 30R is arranged such that in the initial state, the inclination part 26a is located on the left side of the center line of the reflector 84.

FIGS. 4A to 4C show a high-beam light distribution pattern, formed on a virtual vertical screen located at a predetermined position in front of the lighting device, for example, at a position of 25 m ahead of the lighting device.
FIG. 4A shows a right side light distribution pattern RP formed by the right side lighting device 30R. The right side light distribution pattern RP has an elliptical shape in its entirety. Further, the distribution pattern is symmetrical with respect to the line V-V serving as the vertical line that passes the vanishing point in the front direction of the vehicle headlamp 10. Furthermore, the region above the line H-H is slightly smaller than the region below the line H-H. The three ellipses in the figure express differences in the illuminance. A part closer to the center has a higher illuminance.

Each inclined line in the figure indicates the cutoff line RC formed in the right side light distribution pattern RP. As shown in FIG. 1, the projection lens 22 composed of a planar-convex aspheric lens is arranged in front of the high-beam formation shade 26. Thus, it should be noted that the projection image formed in the high-beam illumination area is inverted on the virtual vertical screen.

As indicated by an arrow in the figure, the cutoff line RC is movable horizontally in a direction of crossing the optical axis Ax. The cutoff line RC is a straight line extending toward the upper right, and is located on the right side of the line V-V in the initial state. The moving range of the cutoff line RC is determined by the movable region of the high-beam formation shade 26. In the illustration of FIG. 4A, the cutoff line RC is movable to both sides of the line V-V, only by approximately 1/2 of the ellipse major axis. However, it is preferable that the cutoff line RC is movable over an almost entire range of the major axis.

FIG. 4B shows a left side light distribution pattern LP formed by the left side lighting device 30L. Similarly to the right side light distribution pattern RP, the left side light distribution pattern LP has an elliptical shape in its entirety. Further, the shape is symmetrical with respect to the line V-V, while the region above the line H-H is slightly smaller than the region below the line H-H. The cutoff line LC is a straight line extending toward the lower right, and is located on the left side of the line V-V in the initial state. The other points in the configuration are similar to those of the cutoff line RC.

Here, it is preferable that the inclination angles of the cutoff lines RC and LC are approximately 60 degrees relative to the line H-H. This angle value has been determined empirically with taking into consideration: the influence to the driver of an in-front vehicle caused at the time of projection of an overall light distribution pattern described later; the illuminance of the road surface at that time; and the like.
However, depending on the characteristics or the like of the headlamp, the inclination angles of the cutoff lines may be greater or smaller than 60 degrees.

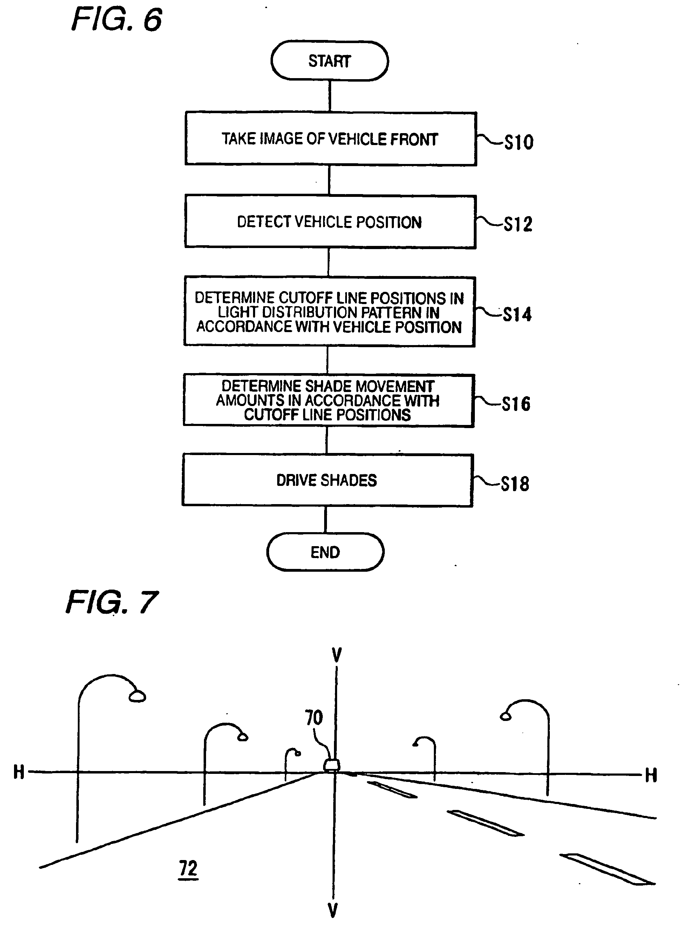

FIG. 4C shows an overall light distribution pattern generated by superposing the right side light distribution pattern RP and the left side light distribution pattern LP. Each of the right side light distribution pattern RP and the left side light distribution pattern LP generates an ellipse of the same size. Thus, in the overall light distribution pattern obtained by superposing these two, the part below the line H-H has twice the illuminance in comparison with a single pattern. However, in the part above the line H-H, a part of the pattern has twice the illuminance. Then, depending on the positions of the cutoff lines RC and LC in the light distribution pattern, a V-shaped shaded region is formed in the part above the line H-H of the overall light distribution pattern. When the positions of the cutoff lines are changed, the V-shaped shaded region can be moved horizontally along the major axis of the ellipse. Alternatively, the shaded region can be moved vertically in the part above the line H-H. This situation is described later in detail with reference to FIG. 7 and the subsequent figures.

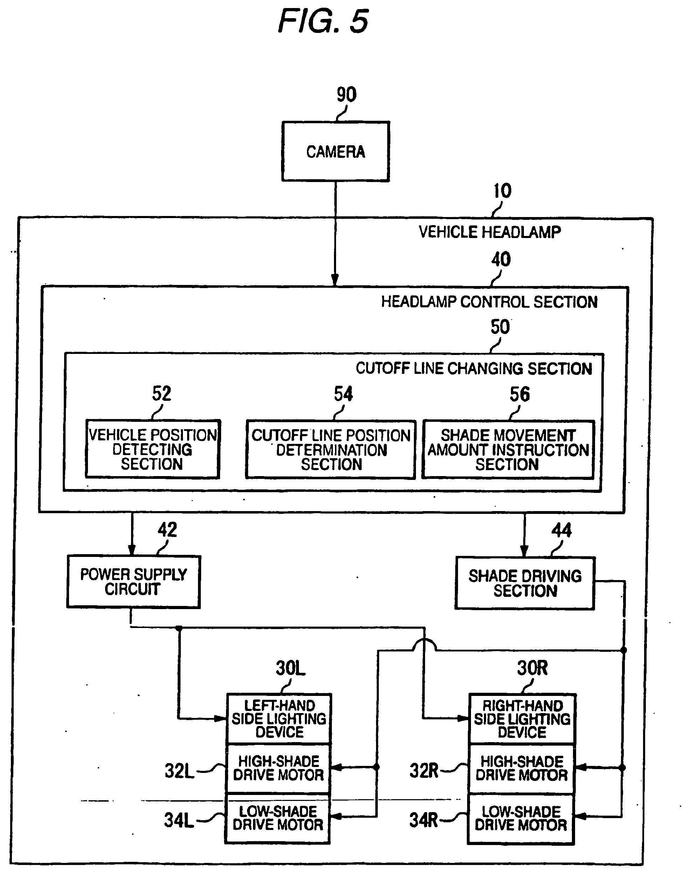

FIG. 5 is a functional block diagram showing an overall configuration of the vehicle headlamp 10. In a case that a hardware configuration is to be employed, each block shown here may be implemented by electric elements such as a CPU and a memory of a computer as well as by a mechanical devices, an electric circuit, or the like. In a case that a software configuration is to be employed, each block may be implemented by a computer program or the like. In this figure, each block is in the form of a functional block implemented by the cooperation of these components. Thus, it should easily be understood by a person skilled in the art that these functional blocks may be implemented in various forms obtained by combining hardware and software.

The headlight device control section 40 controls the ON/OFF of the left side lighting device 30L and the right side lighting device 30R and the operation of the shades provided in the lighting devices. In response to the operation of a headlight switch (not shown) performed by a driver, the headlight device control section 40 issues an instruction to the power supply circuit 42 so as to turn ON or OFF the left side lighting device 30L and the right side lighting device 30R.
When the driver places an instruction for a low beam through the headlight switch, the headlight device control section 40 instructs the shade driving section 44 such as to move the low-beam formation shade 24 into the upright position. Then, the shade driving section 44 activates the low-shade drive motors 34L and 34R. As a result, a low-beam light distribution pattern is projected. In contrast, when the driver places an instruction for a high beam, the headlight device control section 40 instructs the shade driving section 44 such as to tilt the low-beam formation shade 24. Then, the shade driving section 44 activates the low-shade drive motors 34L and 34R. As a result, the low-beam formation shade 24 is tilted down in a forward direction, and hence a high-beam light distribution pattern is projected.

The cutoff line changing section 50 has a vehicle position detecting section 52, a cutoff line position determination section 54, and a shade movement amount instruction section 56.

On the basis of an image acquired by a CCD (Charge Coupled Device) camera 90 installed in the vehicle for the purpose of image taking of the vehicle front, the vehicle position detecting section 52 detects the position occupied by an in-front vehicle within the light distribution pattern. Specifically, within the image of the vehicle front acquired by the camera 90, the vehicle position detecting section 52 detects the parts corresponding to the headlights or tail lights of the vehicle in accordance with a known algorithm, and then determines the vehicle position with reference to the line H-H and the line V-V in the light distribution pattern. The vehicle position data is outputted to the cutoff line position determination section 54. Techniques of detecting an in-front vehicle from such an image acquired by a camera are common knowledge. Thus, detailed description is omitted here. In place of the camera 90, another detecting means such as a millimeter wave radar and an infrared ray radar may be employed for detecting the position of an in-front vehicle.

When an instruction for a high beam has been placed by the driver, the cutoff line position determination section 54 determines the horizontal positions of the cutoff lines RC and LC in the right side light distribution pattern RP and the left side light distribution pattern LP such that a shaded region should be formed in accordance with the vehicle position detected by the vehicle position detecting section 52. That is, the cutoff line positions are determined such that an appropriate shaded region that does not cause glare to the in-front vehicle should be formed within the overall light distribution pattern obtained by combining the right side light distribution pattern RP and left side light distribution pattern LP. It is preferable that the cutoff lines are arranged such that the intersecting points between the cutoff lines and the line H-H should be located slightly on the outer sides relative to the two ends of the detected in-front vehicle.

The shade movement amount instruction section 56 calculates the amounts of movement for the high-beam formation shades 26 in the right side lighting device 30R and the left side lighting device 30L such that the cutoff lines RC and LC of the right side light distribution pattern RP and the left side light distribution pattern LP should be located at the horizontal positions having been set up by the cutoff line position determination section 54. Then, the shade movement amount instruction section 56 issues an instruction to the shade driving section 44.
The shade driving section 44 transmits a driving signal to the high-shade drive motors 32L and 32R such that the amounts of movement instructed by the shade movement amount instruction section 56 should be realized.

FIG. 6 is a flow chart showing a flow of shading control performed in accordance with the vehicle position according to the present embodiment. The camera 90 mounted on the vehicle takes an image of the vehicle front (S10) . Then, on the basis of the taken image, the vehicle position detecting section 52 detects the position occupied by an in-front vehicle within the high-beam light distribution pattern (S12). Then, on the basis of the detected vehicle position, the cutoff line position determination section 54 determines the cutoff line positions in the right side light distribution pattern RP and the left side light distribution pattern LP such that an overall light distribution pattern should be formed in which a shaded region is located at the vehicle part (S14). Then, in accordance with the determined cutoff line positions, the shade movement amount instruction section 56 determines the amounts of movement for the high-beam formation shades 26 in the left side lighting device 30L and the right side lighting device 30R (S16). The shade driving section 44 transmits a control signal corresponding to the shade movement amount to the high-shade drive motors 32R and 32L (S18).

The operation in the above-mentioned configuration according to the present embodiment is as follows. When an in-front vehicle is detected, the high-beam formation shades are moved within the left and the right lighting devices such as to form a right side light distribution pattern in which a cutoff line is located at the right-hand end of the vehicle position and a left side light distribution pattern in which a cutoff line is located at the left-hand end of the vehicle position. Then, the overall light distribution pattern generated by superposing the left and the right light distribution patterns formed as described above is projected so that a light distribution is realized that does not cause glare to the driver of the in-front vehicle.

Next, the shape of the shaded region in the light distribution pattern generated in accordance with the vehicle position of an in-front vehicle is described below with reference to FIGS. 7 to 18.

FIG. 7 shows a situation that an in-front vehicle 70 is observed during the time that the own vehicle runs on a straight road 72.

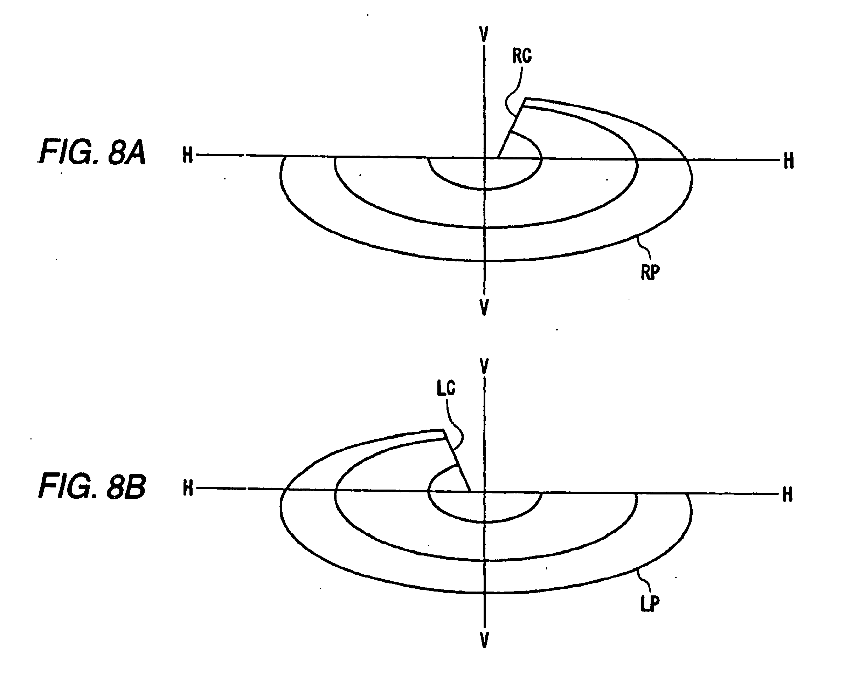

FIG. 8A shows a right side light distribution pattern RP formed by the right side lighting device 30R at the time that an image of the vehicle front is taken in the situation shown in FIG. 7. As illustrated, the position of the cutoff line RC extending toward the upper right is determined such that the intersecting point with the line H-H should be located at the right-hand end of the in-front vehicle 70. FIG. 8B shows a left side light distribution pattern LP formed similarly by the left side lighting device 30L. As illustrated, the position of the cutoff line LC extending toward the lower right is determined such that the contact point with the line H-H should be located at the left-hand end of the in-front vehicle 70.

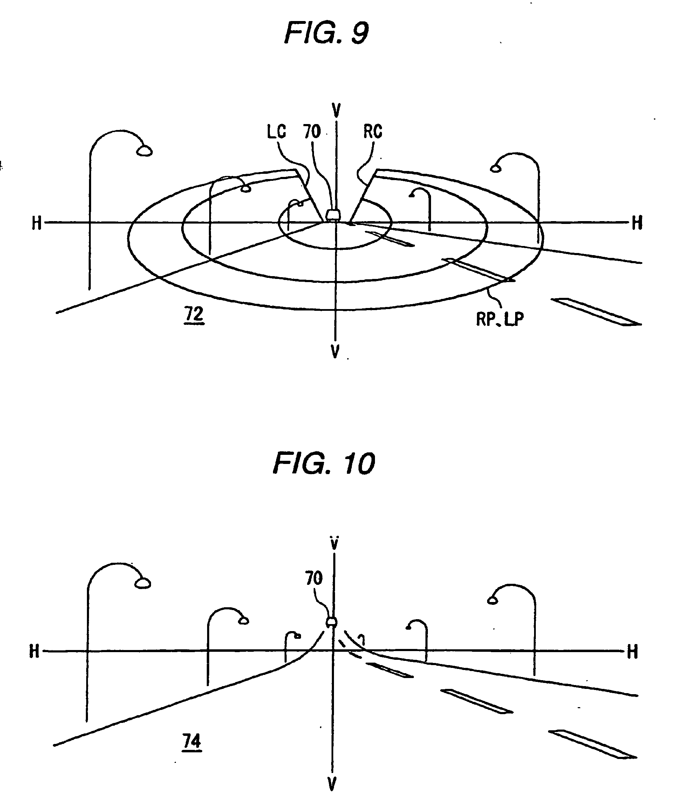

FIG. 9 shows a situation that an overall light distribution pattern generated by superposing the right side light distribution pattern RP and the left side light distribution pattern LP shown in FIG. 8 is projected. As illustrated, a valley-shaped shaded region formed by the cutoff lines RC and LC in accordance with the position of the in-front vehicle 70 is generated in the overall light distribution pattern. By virtue of this, without causing glare to the driver of the in-front vehicle 70, a light distribution pattern having a minimized shaded region can illuminate the road surface.

FIG. 10 shows a situation that an in-front vehicle 70 is observed when the own vehicle runs on an ascending slope road 74 that has an ascending slope in front.

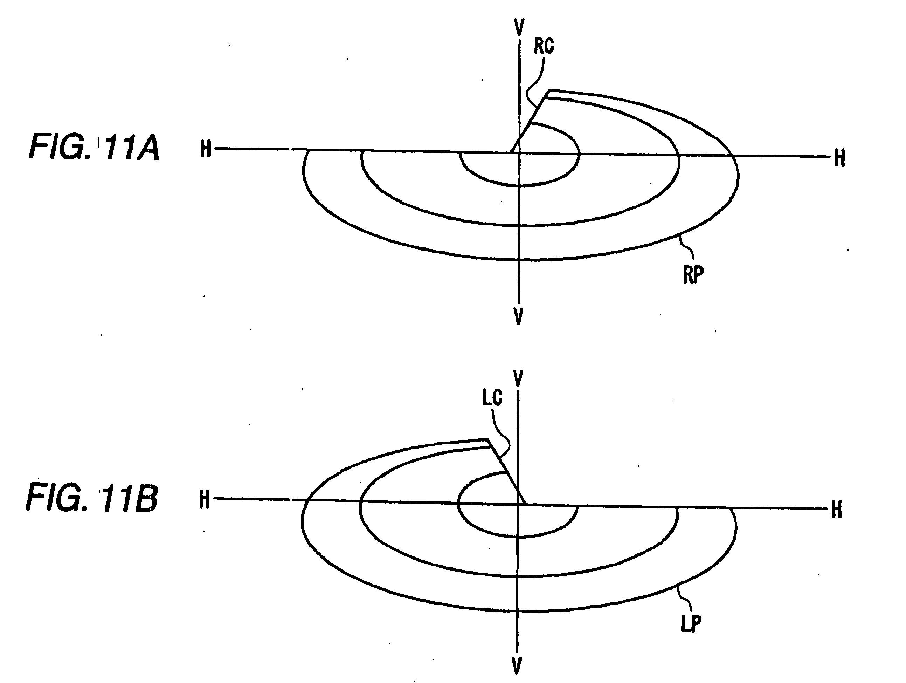

FIG. 11A shows a right side light distribution pattern RP formed by the right side lighting device 30R at the time that an image of the vehicle front is taken in the situation shown in FIG. 10. FIG. 11B shows a left side light distribution pattern LP formed similarly by the left side lighting device 30L. In this case, the in-front vehicle 70 is located above the line H-H. Thus, if the positions of the cutoff lines RC and LC were set up in alignment with the right-hand end and the left-hand end of the in-front vehicle, a shaded region that is excessive in comparison with the size of the in-front vehicle would be formed in the overall light distribution pattern. Thus, when the vehicle position detecting section 52 detects an in-front vehicle above the line H-H, the cutoff line position determination section 54 determines the horizontal positions of the cutoff lines RC and LC such that the intersecting point 75 of the cutoff lines RC and LC should be located slightly below the lower end of the detected in-front vehicle.

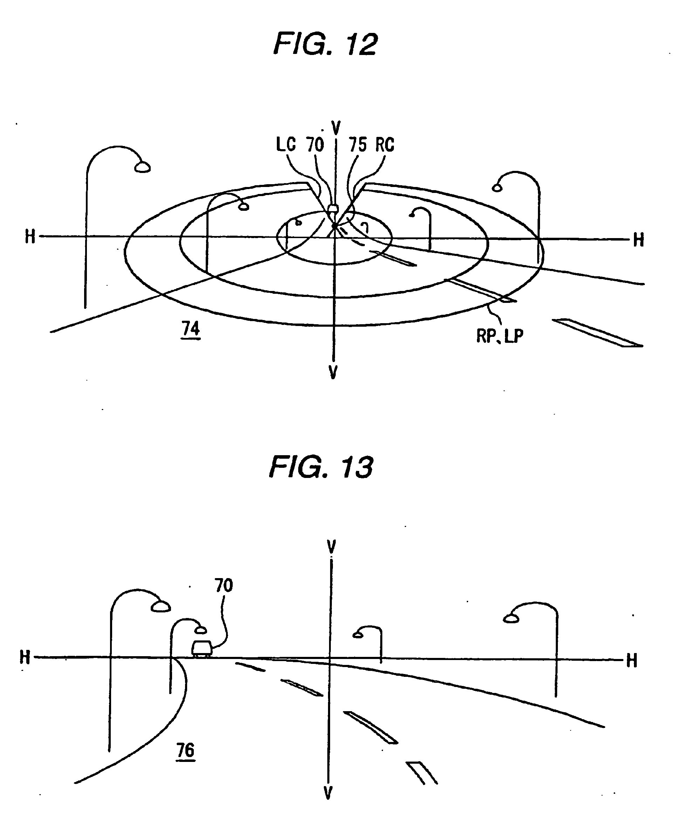

FIG. 12 shows a situation that an overall light distribution pattern generated by superposing the right side light distribution pattern RP and the left side light distribution pattern LP shown in FIG. 11 is projected. As illustrated, the intersecting point 75 of the cutoff lines RC and LC is located below the in-front vehicle 70. Thus, a V-shaped shaded region is formed in the overall light distribution pattern. Even in a case that the in-front vehicle 70 is located more above or more below, when the horizontal positions of the cutoff lines RC and LC are changed appropriately, the intersecting point 75 can be moved up or down in accordance with the vehicle position. By virtue of this, without causing glare to the driver of the in-front vehicle 70, an overall light distribution pattern having a minimized shaded region can illuminate the road surface.

As such, in the present embodiment, in place of vertical lines, inclined straight lines are employed as cutoff lines. This permits that the lower end of the V-shaped shaded region can be moved above the line H-H such as to follow the vehicle position in the vertical direction. Here, FIG. 10 shows a situation that the in-front vehicle 70 is located on the line V-V. However, even in a case that the in-front vehicle 70 is not located on the line V-V, when both of the cutoff lines RC and LC are moved leftward or rightward, the shaded region can be moved such as to follow the vertical movement of the vehicle.

FIG. 13 shows a situation that an in-front vehicle 70 is observed during the time that the own vehicle runs on a curved road 76. In this figure, in contrast to the cases shown in FIGS. 7 and 10, the in-front vehicle 70 is located at a left position distant from the line V-V. Even in such a case, the shaded region can be moved in accordance with the vehicle position.

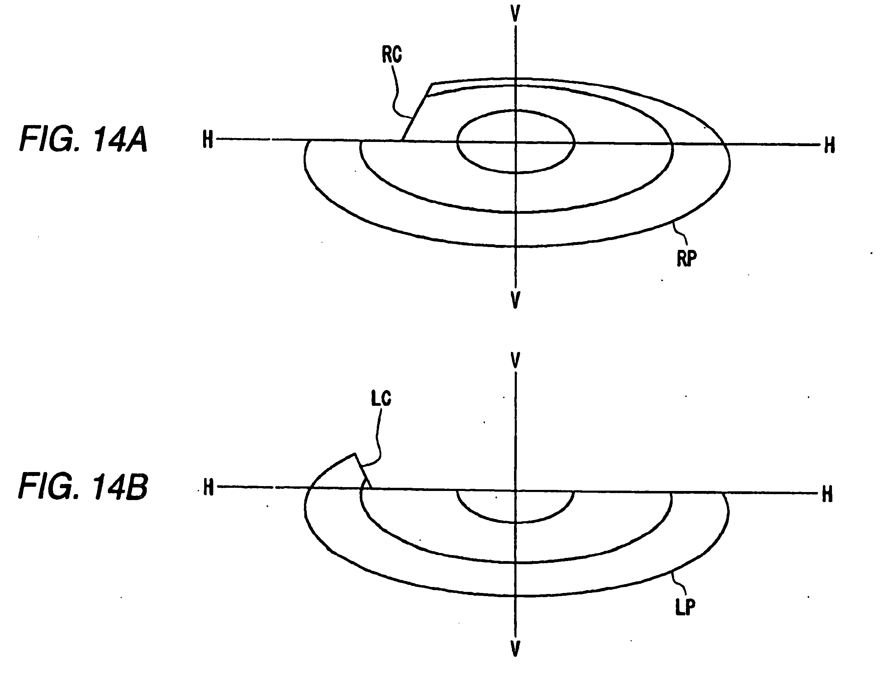

FIG. 14A shows a right side light distribution pattern RP formed by the right side lighting device 30R at the time that an image of the vehicle front is taken in the situation shown in FIG. 13. FIG. 14B shows a left side light distribution pattern LP formed similarly by the left side lighting device 30L. Similarly to the above-mentioned cases, the cutoff line position determination section 54 arranges the intersecting point of the cutoff line RC and the line H-H at the right-hand end of the in-front vehicle, and arranges the intersecting point of the cutoff line LC and the line H-H at the left-hand end of the in-front vehicle. Thus, as illustrated, in the right side light distribution pattern RP, the cutoff line RC is located on the left side greatly exceeding the line V-V. As a result, the right side light distribution pattern RP has an illumination area having approximately an elliptical shape. In contrast, in the left side light distribution pattern LP, the cutoff line LC is located near the left-hand end of the ellipse. As a result, the illumination area of the left side light distribution pattern LP is almost the lower half of the ellipse.

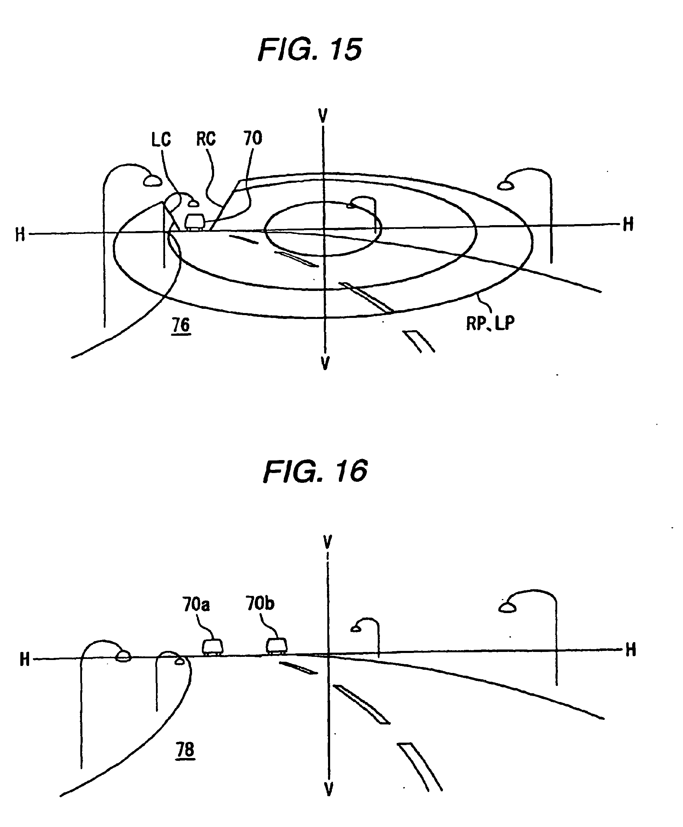

FIG. 15 shows a situation that an overall light distribution pattern generated by superposing the right side light distribution pattern RP and the left side light distribution pattern LP shown in FIG. 14 is projected. As illustrated, even when the horizontal position of the in-front vehicle deviates to the left, the overall light distribution pattern can be formed that has a shaded region minimized in accordance with the vehicle position.

FIG. 16 shows a situation that an ahead-going vehicle 70a and an oncoming vehicle 70b are observed during the time that the own vehicle runs on a curved road 78.

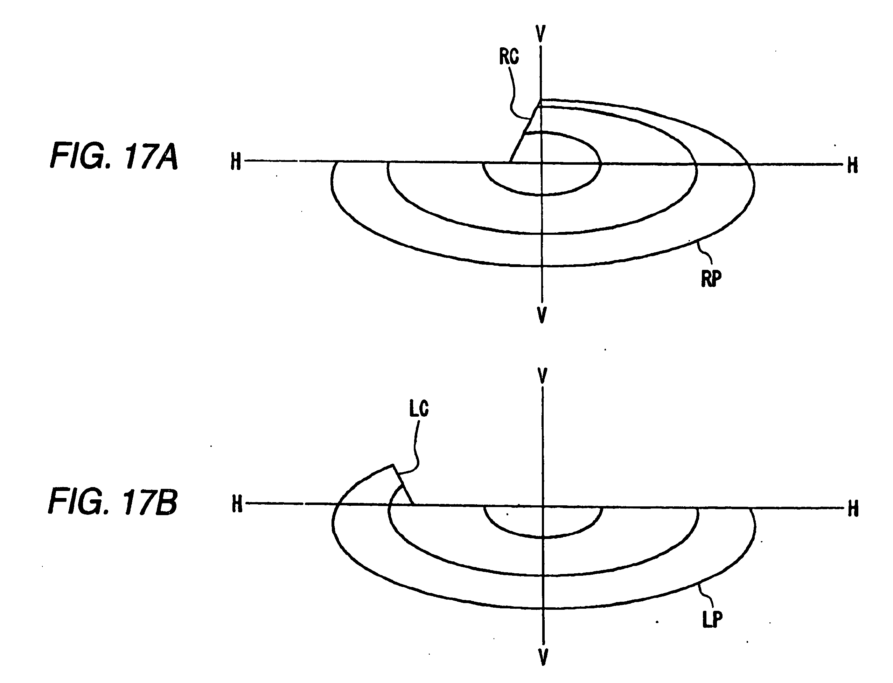

FIG. 17A shows a right side light distribution pattern RP formed by the right side lighting device 30R at the time that an image of the vehicle front is taken in the situation shown in FIG. 16. FIG. 17B shows a left side light distribution pattern LP formed similarly by the left side lighting device 30L. When a plurality of vehicles are recognized in the taken image like is this case, the cutoff line position determination section 54 arranges the intersecting point between the cutoff line RC and the line H-H at the right-hand end of the rightmost vehicle, and arranges the intersecting point between the cutoff line LC and the line H-H at the left-hand end of the leftmost vehicle.

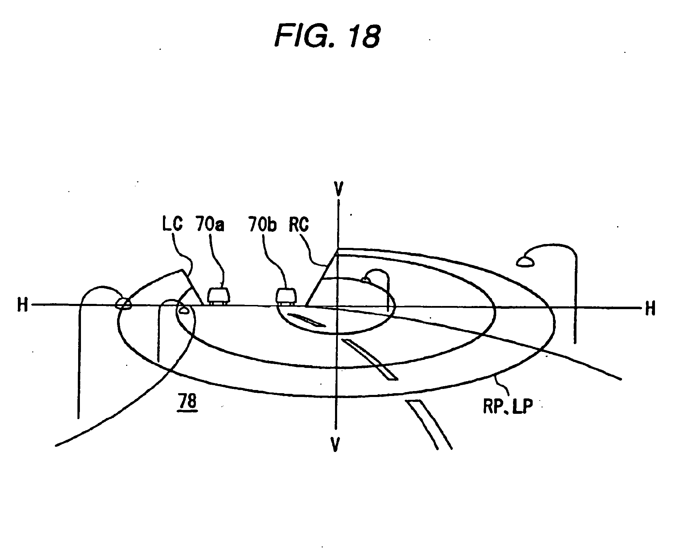

FIG. 18 shows a situation that an overall light distribution pattern generated by superposing the right side light distribution pattern RP and the left side light distribution pattern LP shown in FIG. 17 is projected. As illustrated, when a plurality of vehicles are present in front, the shaded region has a slightly horizontally elongated trapezoidal shape. However, even in this case, without causing glare to the drivers of the in-front vehicles, a light distribution pattern having a minimized shaded region can illuminate the road surface.

As described above, according to the first embodiment, in a headlamp for generating a high-beam light distribution pattern by superposing a right side light distribution pattern and a left side light distribution pattern, when a high-beam formation shade is driven within each of the right side lighting device and the left side lighting device, the cutoff line position can be moved horizontally with in each light distribution pattern. Thus, when a combination of the left and the right cutoff lines is selected appropriately, the shaded region can be moved arbitrarily in a horizontal direction. As a result, an overall light distribution pattern can be generated that has a shaded region only at the in-front vehicle position. In a configuration that the shades can be moved continuously, the cutoff line positions can also be moved continuously within the light distribution pattern. Thus, in accordance with the horizontal position and the size of an in-front vehicle and the number of vehicles, the range of the shaded region can be set up optimally. Thus, without causing glare to the driver of the in-front vehicle, a satisfactory illuminance of the road surface can be ensured in a state that the shaded range is minimized.

Further, the cutoff lines are formed non-perpendicular. That is, one cutoff line is composed of a straight line extending toward the upper right, while the other cutoff line is composed of a straight line extending the lower right. By virtue of this, a light distribution pattern can be formed whose illumination area extends rightward and leftward from the in-front vehicle. As a result, in place of illumination of the immediate vicinity of the side faces of the car body of the in-front vehicle, a slightly distant place is illuminated. This reduces the occasion that the driver of the in-front vehicle feels intimidation of being illuminated immediately from the behind. Further, the shaded region in the overall light distribution pattern can be formed in a V-shape. Then, when the distance between the two cutoff lines is increased or reduced, the V-shaped shaded region can be moved in the vertical direction. Thus, the position of the shaded region can be changed such as to follow the positional fluctuation of the in-front vehicle in the up and down directions. Thus, even when the in-front vehicle is running on an ascending slope, the shaded range can be minimized.

The approach that cutoff lines are moved within a high-beam light distribution pattern so that a shaded region is formed like in the present embodiment has also the following advantages.
That is, in the prior art, when the mode is changed from a high beam to a low beam in order to avoid glare to the in-front vehicle, the side areas of the in-front vehicle cannot be illuminated, and hence forward visibility is degraded. In contrast, according to the present embodiment, forward visibility is hardly degraded.
Further, in the prior art, when the lighting device is swiveled such that the in-front vehicle should not be illuminated, the shaded region would unnecessarily be expanded or alternatively an unnecessary wide area on each side of the road would be illuminated. This causes a possibility that glare can be caused to vehicles and pedestrians located on the left and the right sides of the own vehicle. In contrast, according to the present embodiment, such a possibility is avoided because the direction of the light beams projected from the lighting devices is unchanged.
Further, in the prior art, when the lighting device is swiveled, light distribution on the road surface can vary greatly. This can cause a possibility of uneasiness to the driver. In contrast, according to the present embodiment, regardless of the presence or absence and the position of an in-front vehicle, illuminance does not vary at least in the region below the line H-H. Thus, shading control is achieved with natural feeling.

### <Second Embodiment>

The first embodiment has been described for a case that a high-beam formation shade 26 provided in each of the left and the right lighting devices is driven so that the cutoff line position in the light distribution pattern formed by each lighting device is moved. In contrast, in a second embodiment, the high-beam formation shades 27 are fixed, whereas the left and the right lighting devices are swiveled so that the direction of the optical axes is changed. By virtue of this, the cutoff line position is moved in the light distribution pattern formed by each lighting device.

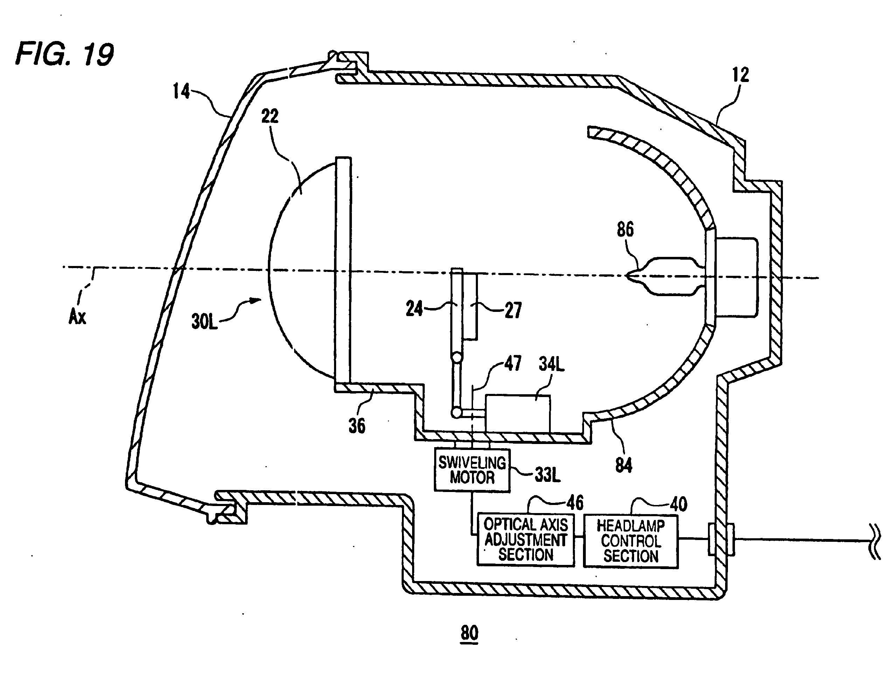

FIG. 19 is a schematic vertical cross sectional view of a vehicle headlamp 80 according to the second embodiment. Here, FIG. 19 shows the left side lighting device 30L. However, the right side lighting device has a similar configuration except that the shape of the high-beam formation shade is in right-left symmetry to the left one.

The vehicle headlamp 80 according to the second embodiment is different from that of the first embodiment in the point that a swiveling motor 33L is provided for changing the angle of the optical axis Ax of the left side lighting device 30L in response to an instruction from an optical axis adjustment section 46. The lighting device 30L is supported by the lamp body 12 in a swing-permitted manner at least in the right and left directions. The swiveling motor 33L is attached to the lower base part of the holder 36, and supports the entire lighting device in a rotatable manner around the shaft 47. The other points in the configuration of the vehicle headlamp 80 are similar to those of the first embodiment, and hence their description is omitted.

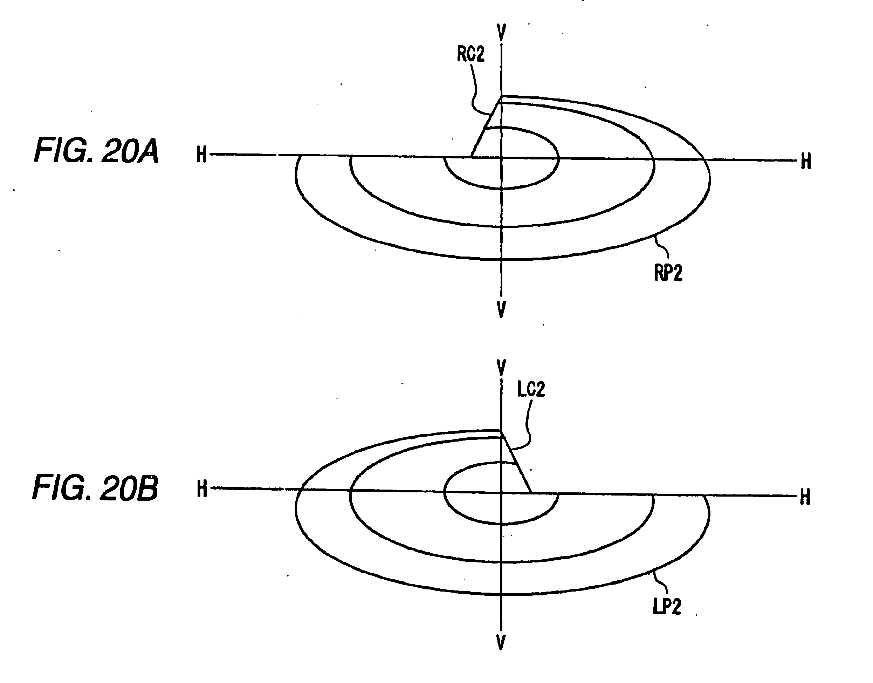

FIGS. 20A and 20B show high-beam light distribution patterns formed on a virtual vertical screen by the vehicle headlamp 80. FIG. 20A shows a right side light distribution pattern RP2 formed by the right side lighting device 30R, while FIG. 20B shows a left side light distribution pattern LP2 formed by the left side lighting device 30L. In the present embodiment, the cutoff lines RC2 and LC2 in the individual light distribution patterns are fixed. That is, their positions are not changed.
The cutoff line RC2 is a straight line extending toward the upper right, and is arranged such that the upper end should be located on the line V-V. The cutoff line LC2 is a straight line extending toward the lower right, and is arranged such that the upper end should be located on the line V-V.

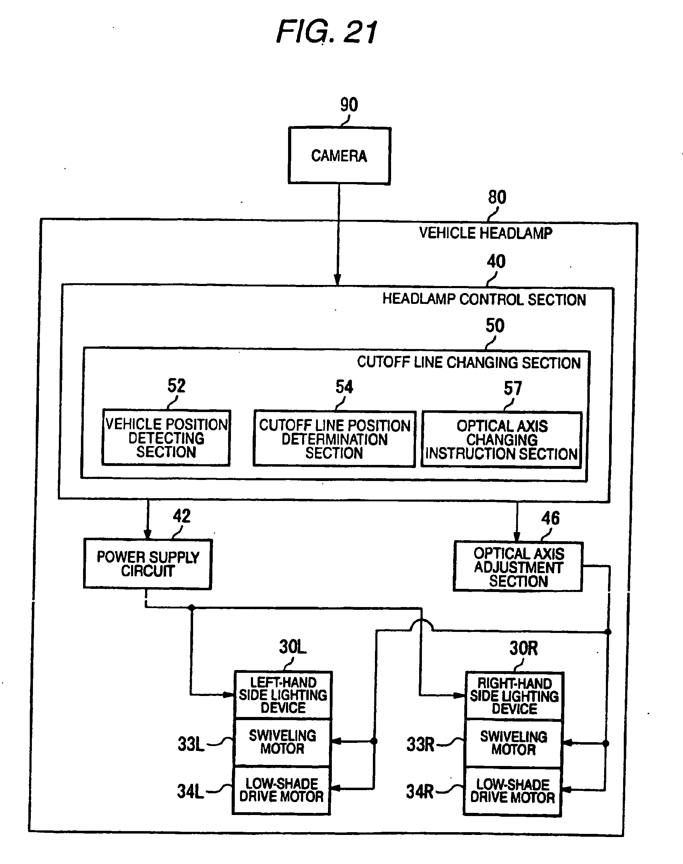

FIG. 21 is a functional block diagram showing the configuration of the vehicle headlamp according to the second embodiment. Also in this figure, each component is implemented by hardware, software, or a combination of these.

The cutoff line changing section 50 has a vehicle position detecting section 52, a cutoff line position determination section 54, and an optical axis changing instruction section 57.
On the basis of an image acquired by the camera 90 installed in the vehicle for the purpose of image taking of the vehicle front, the vehicle position detecting section 52 detects the position occupied by an in-front vehicle within the light distribution pattern. The cutoff line position determination section 54 determines the horizontal positions of the cutoff lines RC2 and LC2 in the right side light distribution pattern RP2 and the left side light distribution pattern LP2 such that a shaded region should be formed in accordance with the vehicle position detected by the vehicle position detecting section 52. It is preferable that the horizontal positions are set up such that the intersecting points between the cutoff lines and the line H-H should be located slightly on the outer sides relative to the two ends of the detected in-front vehicle.

The optical axis changing instruction section 57 calculates the angle of the optical axes Ax of the right side lighting device 30R and the left side lighting device 30L such that the cutoff line RC2 of the right side light distribution pattern RP2 and the cutoff line LC2 of the left side light distribution pattern LP2 should be located at the positions determined by the cutoff line position determination section 54, and then issues an instruction to the optical axis adjustment section 46.
The optical axis adjustment section 46 transmits a control signal to the swiveling motors 33L and 33R of the left and the right lighting devices such that the optical axial angle instructed by the optical axis changing instruction section 57 should be realized. As a result, the right and left directional angle of the optical axis Ax of the left and the right lighting devices is adjusted.

The operation in the above-mentioned configuration according to the present embodiment is as follows. When an in-front vehicle is detected, the right side-lighting device is swiveled such that the cutoff line of the right side light distribution pattern should be located at the right-hand end of the vehicle position within the light distribution pattern. At the same time, the left side lighting device is swiveled such that the cutoff line of the left side light distribution pattern should be located at the left-hand end of the vehicle position. Then, the overall light distribution pattern generated by superposing the left and the right light distribution patterns formed as described above is projected so that a light distribution is realized that does not cause glare to the driver of the in-front vehicle.

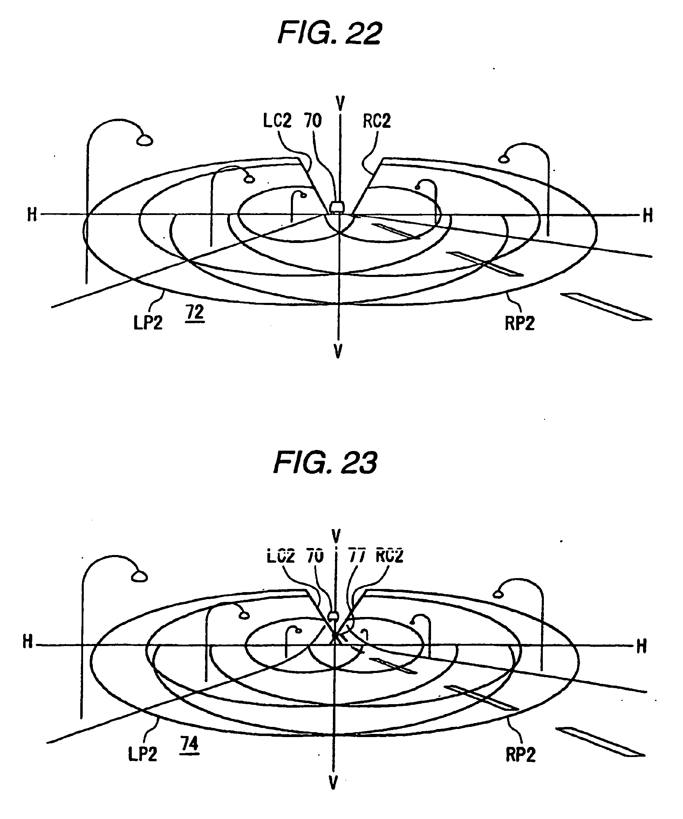

Next, the shape of the shaded region in the light distribution pattern generated in accordance with the vehicle position of an in-front vehicle is described below with reference to FIGS. 22 to 24.

FIG. 22 shows an overall light distribution pattern used in a case that an in-front vehicle 70 is observed in front of the own vehicle that runs on a straight road 72. As illustrated, the configuration that the cutoff line RC2 of the right side light distribution pattern RP2 is located at the right-hand end of the in-front vehicle 70 and that the cutoff line LC2 of the left side light distribution pattern LP2 is located at the left-hand end of the in-front vehicle 70 is similar to that of the first embodiment (see FIG. 7). However, in the present embodiment, the cutoff line position within each light distribution pattern is fixed. Thus, in order that the cutoff lines should be shifted from the line V-V, the optical axes of the left and the right lighting devices are tilted.
Accordingly, the right side light distribution pattern RP2 and the left side light distribution pattern LP2 do not completely overlap with each other, and hence are projected in a shape expanded in the right and left directions.

FIG. 23 shows an overall light distribution pattern used in a case that an in-front vehicle 70 is observed in front of the own vehicle that runs on an ascending slope road 74.
As illustrated, the point that the lower end of the intersecting point 77 of the cutoff line RC2 and the cutoff line LC2 should be arranged in accordance with the vertical directional position of the in-front vehicle 70 is similar to that of the first embodiment (see FIG. 10). Even in this example, the right side light distribution pattern RP2 and the left side light distribution pattern LP2 do not completely overlap with each other. In comparison with the case of FIG. 22, the optical axes of the left and the right lighting devices have smaller tilting angles. Thus, the illumination area of the road is slightly small on the two sides.

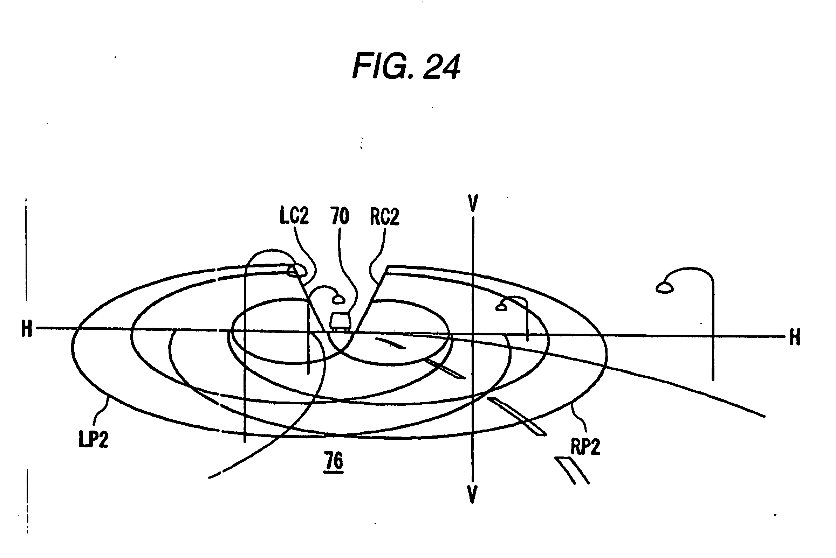

FIG. 24 shows an overall light distribution pattern used in a case that an in-front vehicle 70 is observed in front of the own vehicle that runs on a curved road 76. As illustrated, the configuration that the cutoff line RC2 of the right side light distribution pattern RP2 is located at the right-hand end of the in-front vehicle 70 and that the cutoff line LC2 of the left side light distribution pattern LP2 is located at the left-hand end of the in-front vehicle 70 is similar to that of the first embodiment (see FIG. 13). However, the illumination area is expanded in the right and left directions, in particular, toward the left side of the road.

As described above, in the vehicle headlamp according to the second embodiment, the angle of the optical axis of each lighting device is changed in the right and left directions so that the cutoff line positions are moved horizontally within the right side light distribution pattern and the left side light distribution pattern. Thus, when a combination of the left and the right cutoff lines is selected appropriately, the shaded region can be moved arbitrarily in a horizontal direction. As a result, an overall light distribution pattern can be generated that has a shaded region only at the in-front vehicle position. In a configuration that the angle of the optical axis of each lighting device can be moved continuously, the cutoff line positions can also be moved continuously within the light distribution pattern. Thus, in accordance with the horizontal position and the size of an in-front vehicle and the number of vehicles, the range of the shaded region can be set up optimally. Thus, without causing glare to the driver of the in-front vehicle, a satisfactory illuminance of the road surface can be ensured in a state that the shaded range is minimized.

The present invention has been described above with reference to several embodiments. These embodiments are merely illustrative. That is, it should be understood by a person skilled in the art that modifications such as an arbitrary combination of these embodiments and an arbitrary combination of the components or the processes in the embodiments fall within the scope.

The present invention is not limited to the above specific embodiments. That is, modifications such as various kinds of design change may be performed on the basis of knowledge owned by a person skilled in the art. The configuration shown in each figure is an illustrative example, and hence may be modified appropriately as long as a similar function is achievable.

For example, the lighting device 30 in each embodiment is of a direct projection type in which light from the bulb 86 is directly projected by the projection lens 22. However, the lighting device 30 may be of a so-called reflection type.

The cutoff lines formed in the right side light distribution pattern and the left side light distribution pattern may be curved lines in place of the straight lines. In this case, the shaded region formed in the overall light distribution pattern can be of a U-shape in place of a V-shape.

The embodiments have been described for a case that the right side lighting device forms a right side light distribution pattern while the left side lighting device forms a left side light distribution pattern. However, this relation may be reversed. That is, the right side lighting device may form a left side light distribution pattern while the left side lighting device may form a right side light distribution pattern.

The embodiments have been described for a case that the right side lighting device and the left side lighting device are those switchable between a low beam and a high beam. However, these lighting devices may be high-beam dedicated devices. That is, a high-beam formation shade may solely be provided in each lighting device.

The first embodiment has been described for a case that the high-beam formation shade is driven in a direction of crossing the optical axis so that the cutoff line is moved within the light distribution pattern. However, in place of this configuration, in the lighting device, a so-called rotary shade may be provided in which a plurality of high-beam formation shades having mutually different shading areas are attached to the circumference side-surfaces of a revolving shaft with intervals with each other. Then, the shaft is revolved so that any one of the shades is located at the focal point of the reflector. By virtue of this, the cutoff line is moved within the light distribution pattern.

Further, the lighting device having a configuration that the high-beam formation shade is movable according to the first embodiment may be used in combination with a well-known swivel mechanism. By virtue of this, without causing glare to the driver of an in-front vehicle, illumination control is achieved in accordance with cornering of the vehicle.

### [Description of Reference Numerals and Signs]

10, 80 vehicle headlamp, 12 lamp body, 14 light transmitting cover, 22 projection lens, 24 low-beam formation shade, 26 high-beam formation shade, 30L left side lighting device, 30R right side lighting device, 32 high-shade drive motor, 33 swiveling motor, 34 low-shade drive motor, 36 holder, 40 headlight device control section, 42 power supply circuit, 44 shade driving section, 46 optical axis adjustment section, 50 cutoff line changing section, 52 vehicle position detecting section, 54 cutoff line position determination section, 56 shade movement amount instruction section, 57 optical axis changing instruction section, 70 in-front vehicle, 84 reflector, 86 bulb, 90 camera, Ax optical axis, RC right-hand cutoff line, LC left-hand cutoff line, RP right-hand light distribution pattern, LP left-hand light distribution pattern

## Claims

1. A vehicle headlamp (10, 80) comprising:
first and second lighting devices (30R, 30L) that illuminate a region including a part above a cutoff line of a low-beam light distribution pattern;
**characterized by**
a first shade (26) provided in the first lighting device (30R, 30L) to shade a part of light emitted from a light source (86) of the first lighting device (30R, 30L) so as to form a first light distribution pattern (RP, RP2) that has a non-perpendicular cutoff line (RC, RC2) located above a horizontal line (H-H) and extending toward the upper right;
a second shade (26) provided in the second lighting device (30R, 30L) to shade a part of light emitted from a light source (86) of the second lighting device (30R, 30L) so as to form a second light distribution pattern (LP, LP2) that has a non-perpendicular cutoff line (LC, LC2) located above the horizontal line (H-H) and extending toward the lower right;
a vehicle position detecting means (52) for detecting a position of an in-front vehicle;
a position determining means (54) for determining a horizontal position of the non-perpendicular cutoff lines (RC, LC, RC2, LC2) such that an overall light distribution pattern generated by superposing the first light distribution pattern (RP, RP2) with the second light distribution pattern (LP, LP2) has a shaded region in accordance with a vehicle position detected by the vehicle position detecting means (52); and
a cutoff line moving means (44, 46) for moving the non-perpendicular cutoff lines (RC, LC, RC2, LC2) of the first light distribution pattern (RP, RP2) and the second light distribution pattern (LP, LP2) in response to an instruction from the position determining means (54).

2. The vehicle headlamp (10, 80) according to claim 1, wherein the position determining means (54) combines the non-perpendicular cutoff lines (RC, LC, RC2, LC2) of the first light distribution pattern (RP, RP2) and the second light distribution pattern (LP, LP2) so as to form an approximately V-shaped shaded region, and determines a lower end position of the V-shaped shaded region such that the V-shaped shaded region follows the vehicle position in the vertical direction detected by the vehicle position detecting means (52).

3. The vehicle headlamp according to claim 1 or 2, wherein the cutoff line moving means (44) comprises a shade driving means (44) for moving the first shade (26) or the second shade (26) in a direction of crossing an optical axis (Ax) within each lighting device (30R, 30L).

4. The vehicle headlamp according to any one of claims 1 to 3, wherein the first and second lighting device (30R, 30L) further comprise a low-beam formation shade (24) for shading a part of light emitted from the light source (86) and forming the low-beam light distribution pattern.

5. The vehicle headlamp according to claim 1 or 2, wherein the cutoff line moving means (46) comprises a swivel means (46) for horizontally rotating the optical axis (Ax) of each of the first and second lighting device (30R, 30L).

## Patentansprüche

1. Fahrzeug-Scheinwerfer (10,80), der umfasst:
eine erste und eine zweite Beleuchtungseinrichtung (30R, 30L), die einen Bereich beleuchten, der einen Teil oberhalb einer Grenzlinie eines Abblend-Lichtverteilungsmusters einschließt;
**gekennzeichnet durch**
eine erste Abschirmung (26), die in der ersten Beleuchtungseinrichtung (30R, 30L) vorhanden ist, um einen Teil des von einer Lichtquelle (86) der ersten Beleuchtungseinrichtung (30R, 30L) emittierten Lichtes abzuschirmen und ein erstes Lichtverteilungsmuster (RP, RP2) auszubilden, das eine nicht-senkrechte Grenzlinie (RC, RC2) hat, die sich oberhalb einer horizontalen Linie (H-H) befindet und nach oben rechts verläuft;
eine zweite Abschirmung (26), die in der zweiten Beleuchtungseinrichtung (30R, 30L) vorhanden ist, um einen Teil des von einer Lichtquelle (86) der zweiten Beleuchtungseinrichtung (30R, 30L) emittierten Lichtes abzuschirmen und ein zweites Lichtverteilungsmuster (LP, LP2) auszubilden, das eine nicht-senkrechte Grenzlinie (LC, LC2) hat, die sich oberhalb der horizontalen Linie (H-H) befindet und nach unten rechts verläuft;
eine Fahrzeugpositions-Erfassungseinrichtung (52) zum Erfassen einer Position eines vorausfahrenden Fahrzeugs;
eine Positionsbestimmungs-Einrichtung (54), mit der eine horizontale Position der nicht-senkrechten Grenzlinien (RC, LC, RC2, LC2) so bestimmt wird, dass ein Gesamt-Lichtverteilungsmuster, das erzeugt wird, indem auf das erste Lichtverteilungsmuster (RP, RP2) das zweite Lichtverteilungsmuster (LP, LP2) aufgelegt wird, einen abgeschirmten Bereich entsprechend einer **durch** die Fahrzeugpositions-Erfassungseinrichtung (52) erfassten Fahrzeugposition hat; und
eine Grenzlinien-Verschiebeeinrichtung (44, 46), mit der die nicht-senkrechten Grenzlinien (RC, LC, RC2, LC2) des ersten Lichtverteilungsmusters (RC, RC2) und des zweiten Lichtverteilungsmusters (LP, LP2) in Reaktion auf einen Befehl von der Positions-Bestimmungseinrichtung (54) verschoben werden.

2. Fahrzeug-Scheinwerfer (10, 80) nach Anspruch 1, wobei die Positions-Bestimmungseinrichtung (54) die nicht-senkrechten Grenzlinien (RC, LC, RC2, LC2) des ersten Lichtverteilungsmusters (RC, RC2) und des zweiten Lichtverteilungsmusters (LC, LC2) so kombiniert, dass ein ungefähr V-förmiger abgeschirmter Bereich ausgebildet wird, und sie eine untere Endposition des V-förmigen abgeschirmten Bereiches so bestimmt, dass der V-förmige abgeschirmte Bereich der durch die Fahrzeugpositions-Erfassungseinrichtung (52) erfassten Fahrzeugposition in der vertikalen Richtung folgt.

3. Fahrzeug-Scheinwerfer nach Anspruch 1 oder 2, wobei die Grenzlinien-Verschiebeeinrichtung (44) eine Abschirmungs-Antriebseinrichtung (44) umfasst, mit der die erste Abschirmung (26) oder die zweite Abschirmung (26) in einer Richtung verschoben wird, die eine optische Achse (Ax) innerhalb jeder Beleuchtungseinrichtung (30R, 30L) schneidet.

4. Fahrzeug-Scheinwerfer nach einem der Ansprüche 1 bis 3, wobei die erste und die zweite Beleuchtungseinrichtung (30R, 30L) des Weiteren eine Abblendlicht-Ausbildungsabschirmung (24) umfasst, mit der ein Teil des von der Lichtquelle (86) emittierten Lichtes abgeschirmt wird und das Abblend-Lichtverteilungsmuster ausgebildet wird.

5. Fahrzeug-Scheinwerfer nach Anspruch 1 oder 2, wobei die Grenzlinien-Verschiebungseinrichtung (46) eine Schwenkeinrichtung (46) umfasst, mit der die optische Achse (Ax) der ersten und der zweiten Beleuchtungseinrichtung (30R, 30L) horizontal gedreht wird.

## Revendications

1. Phare (10, 80) de véhicule, comprenant :
des premier et deuxième dispositifs d'éclairage (30R, 30L) qui éclairent une région comprenant une partie située au-dessus d'une ligne d'extinction d'un modèle de distribution de feu de croisement ;
**caractérisé par** :
une première nuance (26) prévue dans le premier dispositif d'éclairage (30R, 30L) pour nuancer une partie de lumière émise à partir d'une source de lumière (86) du premier dispositif d'éclairage (30R, 30L) afin de former un premier modèle de distribution de lumière (RP, RP2) qui a une ligne d'extinction non perpendiculaire (RC, RC2) positionnée au-dessus d'une ligne horizontale (H-H) et s'étendant vers la partie supérieure droite ;
une deuxième nuance (26) prévue dans le deuxième dispositif d'éclairage (30R, 30L) pour nuancer une partie de lumière émise à partir d'une source de lumière (86) d'un deuxième dispositif d'éclairage (30R, 30L) afin de former un deuxième modèle de distribution de lumière (LP, LP2) qui a une ligne d'extinction non perpendiculaire (LC, LC2) située au-dessus de la ligne horizontale (H-H) et s'étendant vers le côté inférieur droit ;
des moyens de détection de position de véhicule (52) pour détecter une position d'un véhicule arrivant en face ;
des moyens de détermination de position (54) pour déterminer une position horizontale des lignes d'extinction non perpendiculaires (RC, LC, RC2, LC2) de sorte qu'un modèle de distribution de lumière global généré en superposant le premier modèle de distribution de lumière (RP, RP2) avec le deuxième modèle de distribution de lumière (LP, LP2) a une région nuancée selon une position de véhicule détectée par les moyens de détection de position de véhicule (52) ; et
des moyens de déplacement de ligne d'extinction (44, 46) pour déplacer les lignes d'extinction non perpendiculaires (RC, LC, RC2, LC2) du premier modèle de distribution de lumière (RP, RP2) et du deuxième modèle de distribution de lumière (LP, LP2) en réponse à une instruction provenant des moyens de détermination de position (54).

2. Phare (10, 80) de véhicule selon la revendication 1, dans lequel les moyens de détermination de position (54) combinent les lignes d'extinction non perpendiculaires (RC, LC, RC2, LC2) du premier modèle de distribution de lumière (RP, RP2) et du deuxième modèle de distribution de lumière (LP, LP2) afin de former une région nuancée approximativement en forme de V et déterminent une position d'extrémité inférieure de la région nuancée en forme de V de sorte que la région nuancée en forme de V suit la position du véhicule dans la direction verticale détectée par les moyens de détection de position de véhicule (52).

3. Phare de véhicule selon la revendication 1 ou 2, dans lequel les moyens de déplacement de ligne d'extinction (44) comprennent des moyens d'entraînement de nuance (44) pour déplacer la première nuance (26) ou la deuxième nuance (26) dans une direction de croisement d'un axe optique (Ax) à l'intérieur de chaque dispositif d'éclairage (30R, 30L).

4. Phare de véhicule selon l'une quelconque des revendications 1 à 3, dans lequel les premier et deuxième dispositifs d'éclairage (30R, 30L) comprennent en outre une nuance de formation de feu de croisement (24) pour nuancer une partie de la lumière émise par la source de lumière (86) et former un modèle de distribution de feu de croisement.

5. Phare de véhicule selon la revendication 1 ou 2, dans lequel les moyens de déplacement de ligne d'extinction (46) comprennent des moyens de pivot (46) pour faire tourner horizontalement l'axe optique (Ax) de chacun parmi les premier et deuxième dispositifs d'éclairage (30R, 30L).
